# EUROPEAN PATENT SPECIFICATION

(11) **EP 1 830 998 B1**
(45) Date of publication and mention of the grant of the patent: **10.12.2008**
(21) Application number: 05850718.7
(22) Date of filing: 28.12.2005
(51) Int. Cl.: B29C 70/08, B29C 70/44

(54) **METHOD FOR COMBINING A FIRST MATERIAL WITH A COMPOSITE MATERIAL TO MANUFACTURE A HOLLOW BODY AND A CONTAINER ELEMENT MADE ACCORDING TO THIS METHOD**
VERFAHREN ZUM KOMBINIEREN EINES ERSTEN MATERIALS MIT EINEM VERBUNDMATERIAL ZUR HERSTELLUNG EINES HOHLKÖRPERS UND GEMÄSS DIESEM VERFAHREN HERGESTELLTES BEHÄLTERELEMENT
PROCEDE PERMETTANT DE COMBINER UN PREMIER MATERIAU AVEC UN MATERIAU COMPOSITE AFIN DE REALISER UN CORPS CREUX, ET CONTENANT REALISE SELON CE PROCEDE

(30) Priority: 29.12.2004 IT VI20040308; 29.12.2004 IT VI20040309
(43) Date of publication of application: 12.09.2007
(73) Proprietor: Gonella, Giandomenico, 36100 Vicenza (IT)
(72) Inventor: Gonella, Giandomenico, 36100 Vicenza (IT)
(74) Representative: Terreran, Gabrio
(86) International application number: PCT/IB2005/003897
(87) International publication number: WO 2006/070267

(56) References cited:
- EP-A- 1 234 654
- EP-A- 1 400 342
- WO-A-02/072337
- DE-A1- 19 601 761
- US-A- 4 785 956

## Description

### FIELD OF THE INVENTION

The invention relates to a method for making an element suited to make up units or parts of units adapted to be used for any purpose for which special mechanical characteristics are required, as well as a method for combining a first material with a composite material.

The invention also relates to a container element, preferably intended for use with foodstuffs, and a method for producing a receptacle.

### DESCRIPTION OF THE PRIOR ART

In various technical fields the use of composite materials for making structural elements and objects of various shapes for different uses is widespread.

It is known that said composite materials offer hish mechanical performances and comprise a polymer matrix and a dispersed fibrous phase.

The polymer matrix generally comprises epoxy resins, while the fibrous phase usually comprises glass or carbon or Kevlar fibres.

According to the known technique, in order to realise and or produce such elements it is necessary to provide a core and a preliminary mould reproducing the shape of the product to be obtained; successively, an epoxy resin is applied to the external surface of the core, with the fibres arranged as desired; the core is then inserted into the mould.

An example of a method for producing elements with an external surface made of epoxy resin and fibrous components is known from document DE1960 761 A1 which discloses the preambles of claims 1 and 22 respectively.

The whole is then introduced into an autoclave and brought to a temperature and a pressure suited to obtain the polymerisation of the resin.

The operator then extracts the product and removes the inner core.

A first drawback of these composite materials is related to the fact that, during use, they interact with some substances, which causes the deterioration of the composite material and/or of the substance with which said material comes into contact. A further drawback is represented by the fact that some composite materials generate electrostatic phenomena and/or phenomena related to electric and/or heat conductivity.

This limits the use of such materials in some applications, and renders it impossible to use them , for example, for building, product manufacturing and food applications.

A further drawback of such materials is constituted by the cost of the production process.

Furthermore, as is known, in some sectors, as for instance in the food or sports sector, special container elements are used for storing and carrying liquid and non liquid products, said containers substantially comprising a receptacle that can generally be closed with a cap or lid.

These elements must present various characteristics including lightness and good mechanical strength, necessary to guarantee the integrity of the product contained therein.

A further and fundamental feature required for these elements, for example in the food sector, is the compatibility between the product contained and the parts of the device which come in contact with it.

This is in particular necessary to guarantee the integrity of the organoleptic characteristics of the product, thus avoiding its deterioration.

Another need is that to guarantying that the product contained does not damage or modify the functionality of the container element or any of its parts.

This limits and sometimes prevents the use of certain materials for making said container elements.

### SUMMARY OF THE INVENTION

The aim of the present invention is to overcome all the drawbacks described.

In particular, it is a first aim of the present invention to propose a method for combining a first material with a composite material in order to obtain an element that has the mechanical characteristics and lightness typical of composite materials and whose construction is simpler and less expensive compared to the elements produced with the known methods.

It is a further aim of the invention to propose a method that can be applied to industrial production, even on a continuous basis.

It is a further aim of the invention to carry out a method that makes it possible to obtain an element that can be used in any application and in particular that does not interact with the substances or elements with which it come into contact during use.

A further aim is to implement a method and a corresponding system that allow the production of elements and/or products and/or parts of products with any geometric and dimensional characteristic.

Another aim is to develop a method which, compared to the known methods, does not require expensive equipments and highly qualified personnel for its exploitation.

A further aim of the invention is to provide an object and more particularly a container element and a receptacle which present high mechanical strength and which can contain any product or substance, guaranteeing its integrity.

Another aim is to carry out an element and a receptacle which, with respect to elements and receptacles of a known type, are lighter in weight and present better mechanical characteristics still maintaining the same thermal features and/or capacities.

A further aim is to implement a method for making said container element and said receptacle which is economic and applicable for industrial production, even on a continuous basis.

Another aim is to implement a method which allows the production of container elements and receptacles of any shape.

A further aim is to implement a method that is easy to apply which allows the production of container elements and receptacles with any geometric and dimensional characteristic.

Another aim is to develop a method which does not require expensive equipment for its implementation.

A further aim is to implement a method particularly suitable for producing container elements and/or receptacles and/or semi-processed items in the packaging sector, preferably for foodstuffs.

The aims mentioned above are achieved by a method for making an element as claimed in claims 1 and 22 respectively.

The method according to the present invention advantageously makes it possible to obtain in a simple and rapid manner an element that combines the high mechanical strength and lightness typical of composite materials.

Still advantageously, the method according to the present invention allows production times and costs to be reduced.

Again advantageously, the method according to the present invention ensures the ideal combination of the two materials of which the element is composed.

Still advantageously, the choice of the material with which the body is made allows elements with different characteristics to be obtained, like for example insulating elements or elements with the desired heat capacity, as well as elements suited to be placed in contact with various substances.

As explained below in greater detail, the method proposed is also advantageously adapted to be exploited in a continuous production system of the above mentioned elements.

The aims above mentioned are achieved also by a container element comprising a receptacle suited to contain a product, advantageously but not necessarily food, which, is **characterised in that** at least one part of at least one wall of said receptacle comprises at least one layer of composite material and in that the internal surface of said receptacle presents at least a second layer of a material suited not to interact with said product.

Further embodiments of the present invention allowing to reach the aims mentioned above are defined in the appended claims.

The method proposed advantageously allows a container element and a receptacle to be obtained which have the high mechanical strength and lightness typical of composite materials.

Again advantageously, the solutions proposed allow the production of an element and a receptacle that do not interact with the product they contain.

Again advantageously, the choice of the internal material allows receptacles to be obtained with different thermal capacities, and suited to contain substantially any type of object or substance, both liquid and non liquid.

Again advantageously, the method proposed ensures the ideal combination of the two materials of which the receptacle is composed.

Again advantageously, according to a preferred embodiment, the composite material forms the whole external surface of the receptacle, thus giving the container element, not only sturdiness, but a particular aesthetic value. This surface may also be advantageously subjected to various further finishing treatments, such as polishing or painting.

### BRIEF DESCRIPTION OF THE DRAWINGS

The aims and advantages described will become more apparent with the following description of some preferred embodiments of the invention; It has however to be noted that the present invention is not limited to the embodiments described below with reference to the drawings, but that the embodiments disclosed only relate to particular examples of the present invention, the scope of which is defined by the appended claims. In particular, in the drawings:
- Figure 1 shows an axonometric view of an element manufactured according to the method of the invention;
- Figure 2 shows a longitudinal section of the element shown in Figure 1;
- Figure 3 shows a phase of production of the element shown in Figure 1;
- Figure 4 shows a subsequent phase of production of the element shown in Figure 1;
- Figures 5 and 6 show a cross section and a longitudinal section, respectively, of the element of Figure 1 during another production phase;
- Figures 7 and 8 show a cross section and a longitudinal section, respectively, of the element of Figure 1 during a subsequent production phase;
- Figure 9 shows an axonometric view and a cross section of another element manufactured according to the method subject of the invention;
- Figure 10 shows a cross section of a further element manufactured according to the method subject of the invention.
- Figure 11 is an axonometric view of a container element according to the invention;
- Figure 12 shows a longitudinal section of a part of the element in Figure 11;
- Figure 13 shows a phase of production of the element in Figure 11;
- Figure 14 shows a subsequent phase of production of the element in Figure 11;
- Figure 15 shows a further phase of production of the element in Figure 11.

### DETAILED DESCRIPTION

The examples of implementation described herein refer to a method for making an element having a substantially prismatic shape. This method, however, can be used to make elements, even structural, having any geometrical shape, size and field of application.

It is clear that the solution proposed can be used also to make elements that constitute more complex parts of products and/or products and/or objects, like for example floors, supports, vehicle bodies, frames, casings, watch cases, cases, pens, container elements with different shapes and applications, such as barrels, cases, etc.

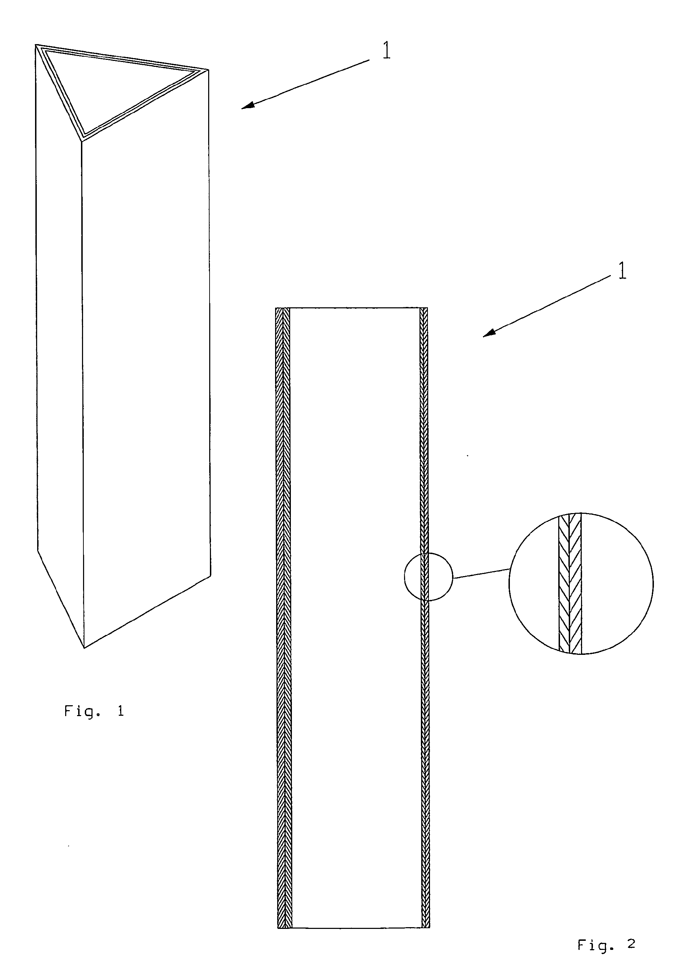

The method for making an element indicated as a whole by 1 in Figures 1 and 2, which is the object of the present invention, will now be described with reference to the Figures from 3 to 8.

According to this method the core of the element 1 comprises a hollow body 2 made with a first material suited to soften at a temperature near the resin polymerisation temperature in such a way as to be perfectly combined with a composite material during its hot polymerisation process and to obtain a substantially monolithic element 1.

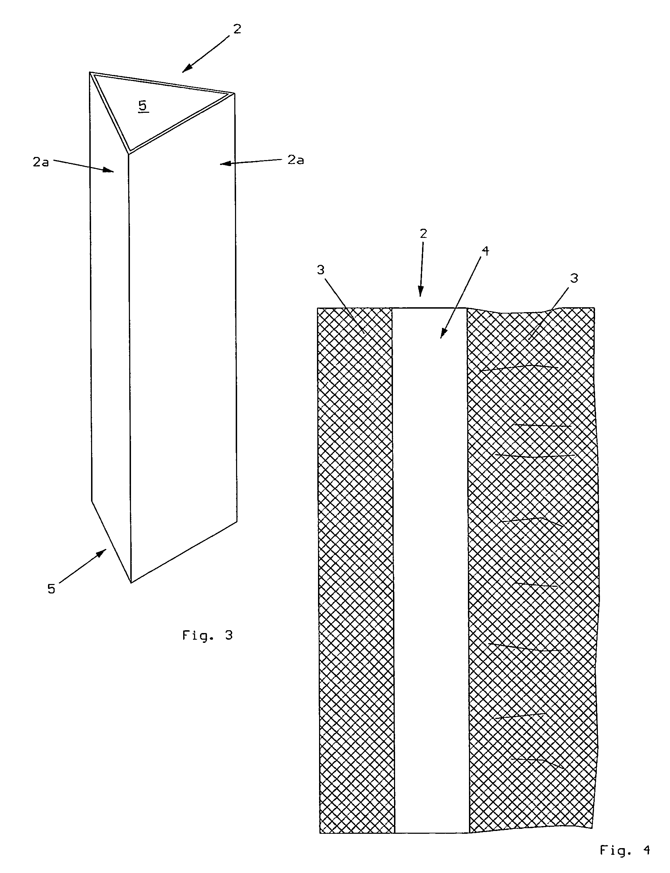

In particular, the method proposed requires the application of at least one layer of fabric 3 of the so-called pre-impregnated type to at least one portion of the external surface 2a of a hollow body 2, which in the case at hand comprises a prismatic tubular element with triangular cross section, as shown in Figures 3 and 4.

The fabric 3 comprises one or more fibrous elements made with carbon and/or glass and/or Kevlar and/or equivalent fibres, impregnated with a thermosetting resin, preferably an epoxy resin, while the body 2 is preferably constituted by a plastic material like for example PVC and/or rubber and/or polycarbonate and/or polyamide and/or PET and/or PETG and/or polyethylene and/or polypropylene, etc.

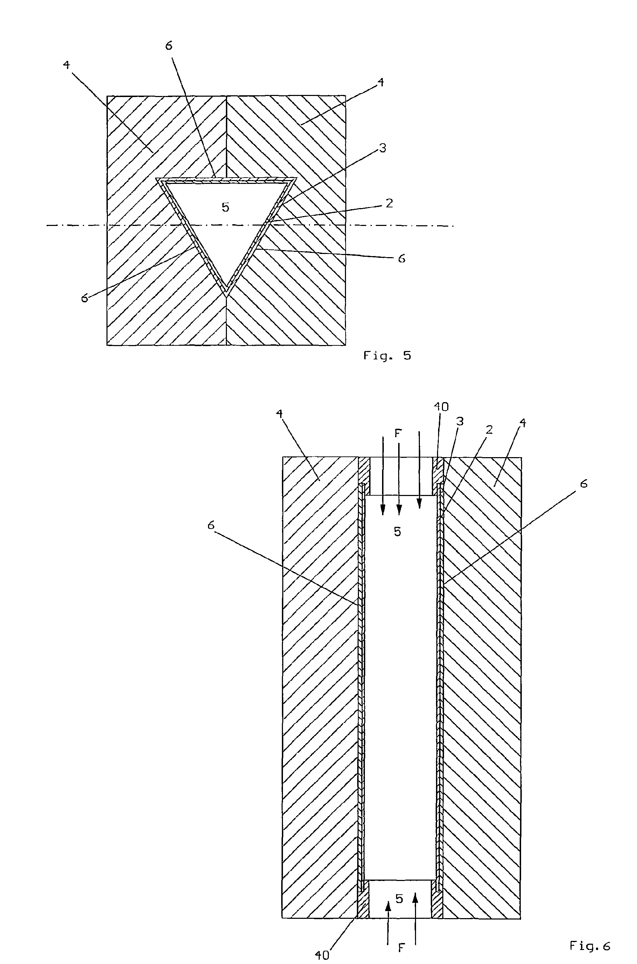

The body 2 is subsequently placed into a mould 4 that reproduces the external shape of the element 1 to be made and that, as shown in detail in Figures 5 and 6, makes the two openings 5 at the end of the body 2 accessible from the outside.

It has however to be noted that the shape of the mould 4 does not have necessarily to reproduce the external shape of the element 1 and it can assume also different shapes.

According to the invention, the epoxy resin and the fibrous elements are then compressed against the internal surfaces 6 of the walls of the mould 4 until at least the resin polymerisation pressure is reached. This is obtained, in this specific case, by directly blowing in a fluid F under pressure through the two openings 5 by means of a distributor 40 whose connection with the body 2 must preferably be tight, to prevent the infiltration of the fluid F between the walls 6 and the fabric 3.

At the same time the body 2 is heated until the resin polymerisation temperature is reached and softening and/or partial melting of the external surface 2a of the body 2 is obtained. This is achieved by heating the fluid F and/or the mould 4.

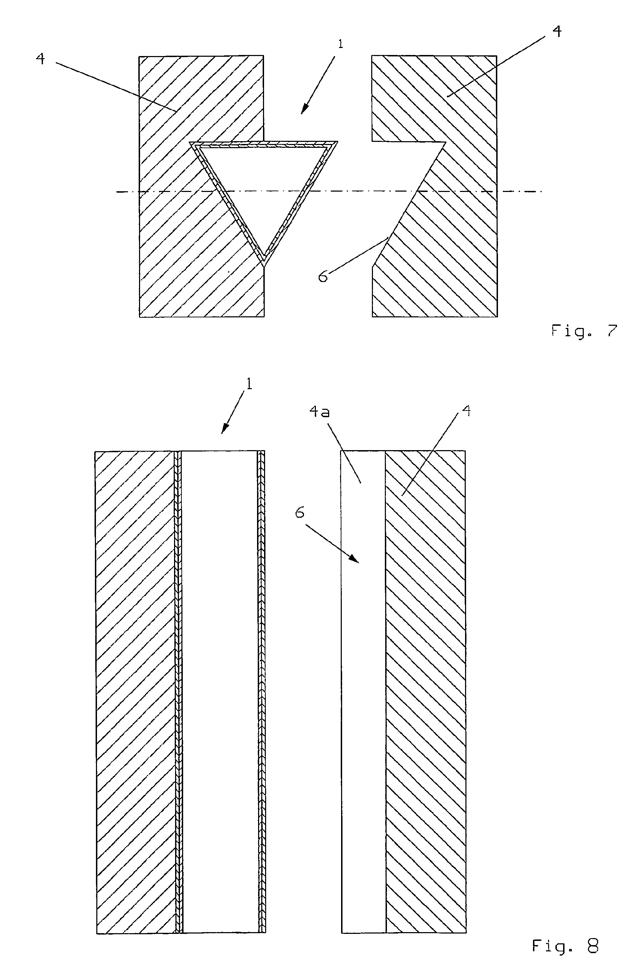

Lastly, once resin polymerisation has been obtained, the element 1 is extracted from the mould 4, as shown in Figures 7 and 8.

It is important to observe that, during the heating phase, the plastic material of which the body 2 is composed melts partially, amalgamating and combining with the fibres and the resin. This gives origin to a mixing and/or intermediate layer, which is situated between the plastic material and the composite material. This third layer is made of a mixture of the materials of the other two neighbouring layers and it represents the transition between these two different materials. Thanks to the partial melting of the plastic material the molecules of this layer can diffuse and penetrate into the composite material layer giving origin to new chemical bonds with these polymers. The plastic material of the interior layer and the composite material of the external layer are kept together by the new chemical bonds formed inside the mixing and/or intermediate layer, thus forming a single, substantially monolithic body.

The internal pressure, which varies between 5 and 20 atm depending on the composite material used, and which is preferably 6 atm, also contributes actively to this process.

In another embodiment of the invention, the compression of the resin and of the one or more fibrous elements against the walls takes place by indirect action of the fluid which, in that case, is blown inside an expandable body located inside the cavity.

It must also be observed that the increase in the temperature causes the expansion of the fluid F, composed in this specific case of air, thus contributing to increase the pressure inside the body 2.

The pressure exerts a force on the external surface 2a of the body 2, which contributes to compact and amalgamate the first plastic material and the resin, forming a mixing and/or intermediate layer where new chemical bonds between the molecules of the plastic layer and those of the composite material layer take place, making the two materials adhere definitively to each other.

In this regard it must also be observed that the high pressure also allows the optimum adhesion of the resin and the fibrous material to the surface of the mould 4, thus faithfully reproducing the external shape of the desired element or product.

As regards the polymerisation temperature, it too varies according to the characteristics of the resin used. It must be observed that said temperature must be compatible with the softening temperature of the first material of which the body 2 is made and preferably ranges between 100 and 300° C.

In fact, a temperature much higher than the softening temperature of the first material may cause the complete and undesirable melting of the body 2.

Vice versa, an excessively low temperature would prevent the advantageous softening and the consequent "welding" or "interpenetration" of the body 2 with the composite material and the consequent formation of the mixing and/or intermediate layer.

As regards the first material used to make the hollow body 2, as stated above it may be chosen also according to the characteristics desired for the internal surface of the element 1 and/or according to its field of application.

In particular, said material is preferably synthetic and may, for example, be a plastic material like PVC or polypropylene if the element must be placed in contact with a food liquid, or with hydrocarbons or a rubber and/or polycarbonate and/or polyamide and/or PET and/or PETG and/or polyethylene.

The choice of said first material may advantageously provide the element 1 with good heat or electric insulation. This allows insulating elements with mechanical characteristics typical of carbon fibres to be made.

As regards the pre-impregnated fabric, this may be replaced also by single carbon or glass or Kevlar fibres, applied to the body 2, after application of the epoxy resin.

As regards the body 2, this may be obtained for example by injection moulding or by blowing or with equivalent known techniques. Advantageously, in the case at hand, it substantially reproduces the final shape of the element 1, but in other embodiments it may have any shape.

According to a construction variant, the hollow body 2 does not have any opening and the fluid is blown in by making an opening in the body 2 with a small tube that is inserted in the cavity that it defines, perforating the body 2 itself.

Vice versa, in a further embodiment of the invention the body 2 has a single opening or more than two openings. In this last case the pressurised fluid F is blown into each opening or, alternatively, into one or more of said openings, in which case the others must be closed, even temporarily, to ensure the above-mentioned increase in pressure inside the body 2.

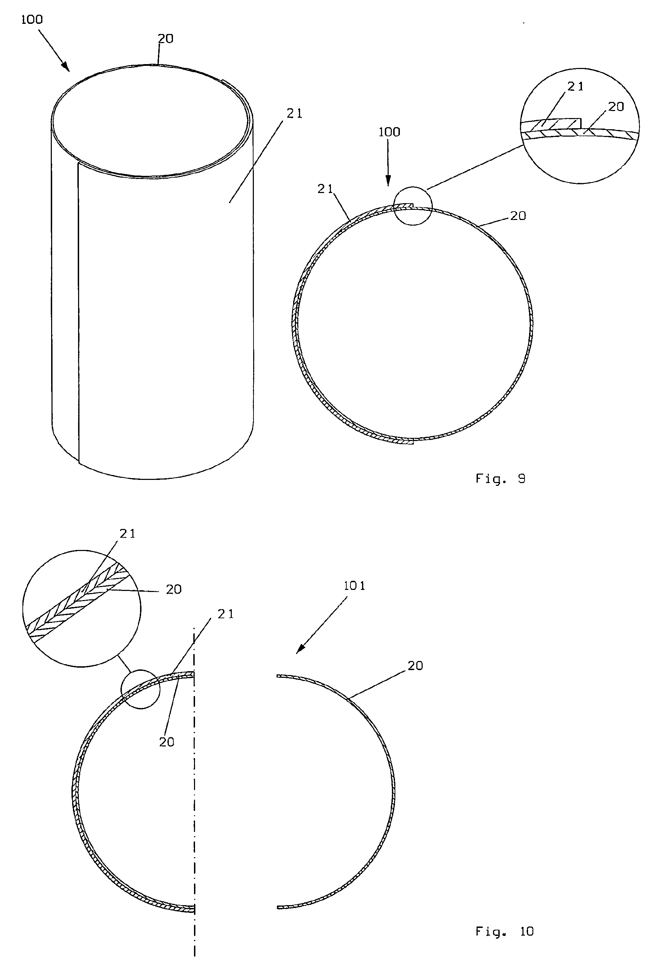

Figure 9 shows an axonometric view and a cross section of another element with round section, indicated as a whole by 100 and manufactured according to the method subject of the invention.

Said element 100 is differentiated from the previous one due to the fact that the combination of the first material 20 with the composite material 21 is not carried out on the whole external surface of the element 100.

Figure 10 shows a cross section of a further element 101 manufactured according to the method subject of the invention. Said element 101 is differentiated from the previous one due to the fact that the portion not in contact with the composite material has been removed.

It should also be observed that the proposed method may be advantageously employed also to make completely closed hollow bodies, that is, bodies without openings, for example a sphere. In this case, as explained above, the fluid F may be blown in through a small tube inserted in the cavity by making a small temporary hole.

As regards the fluid F, it is preferably composed of air, but in other embodiments it may also be made of a fluid and/or different mixtures.

Always according to the invention, the hollow body 2 may also be provided on its external surface with one or more seats suited to contain the composite material.

This solution thus allows also surfaces with non homogeneous mechanical characteristics to be obtained.

The method described may be carried out also by an automatic or semiautomatic system comprising a unit for applying the pre-impregnated fabric or the resin and the fibrous substance, a moulding unit with one or more stations, a unit for blowing in a pressurised fluid and means for controlling the temperature of the body and/or of the resin.

The system may also comprise a unit for moulding the hollow body 2, located upstream from the above mentioned unit for applying the pre-impregnated fabric or the resin and the fibrous substance.

All the above clearly shows that the element and the method, as well as the system proposed, achieve the set aims.

In particular it is clear that, advantageously, the choice of the material that forms one of the surfaces allows elements that are suitable for any use to be obtained.

The method proposed makes it possible to produce structural elements even in series, considerably reducing production times and costs.

Advantageously, the element obtained with the proposed method is substantially made of a compact material having the typical characteristics of the composite material and its internal surface is such as not to interact with the product.

Another embodiments of the invention described below refer to a container element for liquid foodstuffs and more precisely to a flask for sports use.

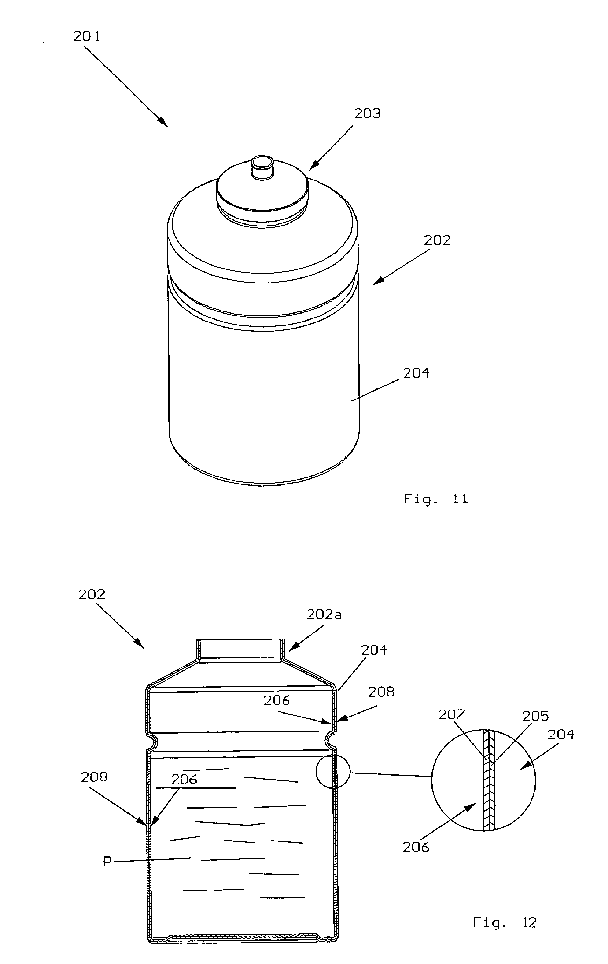

In particular a container element as in the present invention is represented in figure 11, where it is indicated as a whole by 201.

It comprises a cap 203 and a receptacle 202 with a substantially cylindrical shape, shown in detail in figure 12, suited to contain a product P that in the present case, as previously stated, is a liquid foodstuff.

According to the invention, at least one part of the wall 204 of the receptacle 202 comprises at least a first layer of composite material 205 and the internal surface 206 of the wall 204 of the receptacle 202 presents a second layer 207 of material suited not to interact with the product P that it contains.

In the description below, the term composite material is used to mean a material comprising a polymer matrix and a dispersed fibrous phase, having high mechanical performance.

The polymer matrix comprises, for example, a thermosetting resin such as an epoxy resin, while the fibrous phase comprises glass or carbon or Kevlar fibres or equivalent.

In the embodiment represented, the layer of composite material 205, visible also in the detail in figure 12, involves the whole wall 204 of the container 202, comprising the neck 202a.

It must also be observed that the wall 204 of the receptacle 202 may comprise several layers of composite material 205 and in particular some fibrous material, thus increasing at least the mechanical strength of the receptacle 202.

It must be noted that in the embodiment represented the external surface 208 of the receptacle 202 is identified by the composite material 205, thus also aesthetically characterising the receptacle 202.

As to the material with which the internal layer 207 of the wall 204 of the receptacle 202 is made, it varies depending on the intended use of the container element 201 and in particular, in this specific case, it comprises polyethylene which, as is known, does not interact with liquid foodstuffs.

In other solutions said material comprises polypropylene and/or PVC and/or rubber and/or polycarbonate and/or polyamide and/or PET and /or PETG and/or polyethylene and/or more generally a plastic material.

This material may be chosen, as said above, according to the product and the desired characteristics for the internal surface 206 of the receptacle 202 that is to be in contact with the product P.

Advantageously, the solution proposed allows the production of a container element 201 with a high mechanical strength, at the same time ensuring the integrity of the product P and of the characteristics of the element 201 itself, over time.

It must also be observed that, in the embodiment described, the cap 203 is also made of the same material of which the receptacle itself is made, and therefore presents similar characteristics of mechanical strength and of compatibility with the product.

A method for producing the receptacle 202, which is also an object of the present invention, will now be described with reference to the figures from 13 to 15.

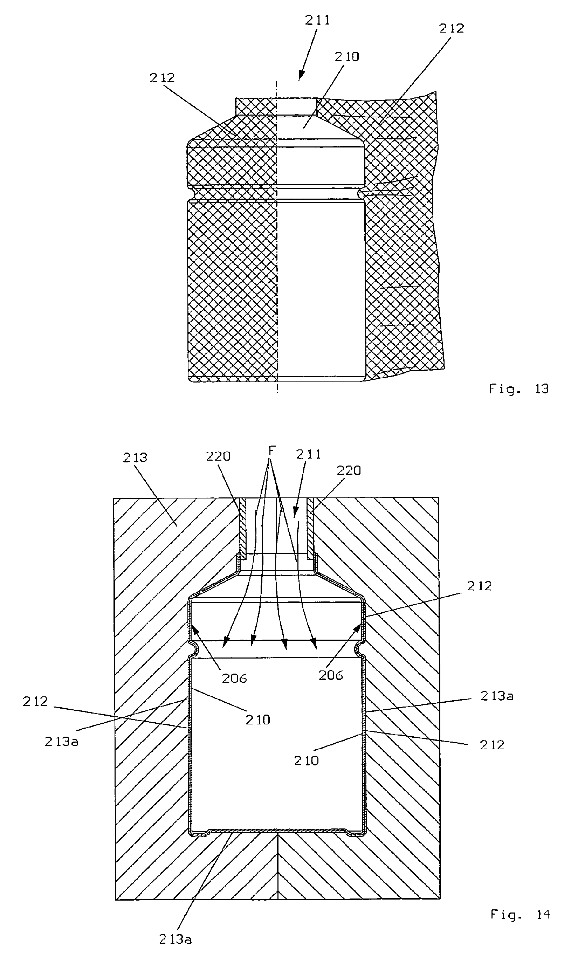

According to the invention, at least one layer of fabric 212, comprising one or more fibrous elements, impregnated with a thermosetting resin, preferably epoxy, is applied to a hollow body 210 with a opening 11, as shown in figure 13.

The body 210 is then enclosed in a mould 213 which, as shown in detail in figure 14, makes the opening 211 accessible from the outside and reproduces the external shape of the receptacle that is to be obtained.

It has however to be noted that the shape of the mould 213 does not have necessarily to reproduce the external shape of the body 210 and it can assume also different shapes.

The epoxy resin and the fibrous elements are then compressed against the internal surfaces 213a of the walls of the mould 213 until at least the resin polymerisation pressure is reached.

This is obtained, in this specific case, by blowing in a fluid F under pressure through a distributor 220, as is observed in figure 14, which seals hermetically the internal surface 206 of the receptacle 202 to prevent the infiltration of the fluid F between the walls 213a and the fabric 212.

At the same time the body 210 is heated until the resin polymerisation temperature is reached and softening of the material of which the body 210 is composed is obtained.

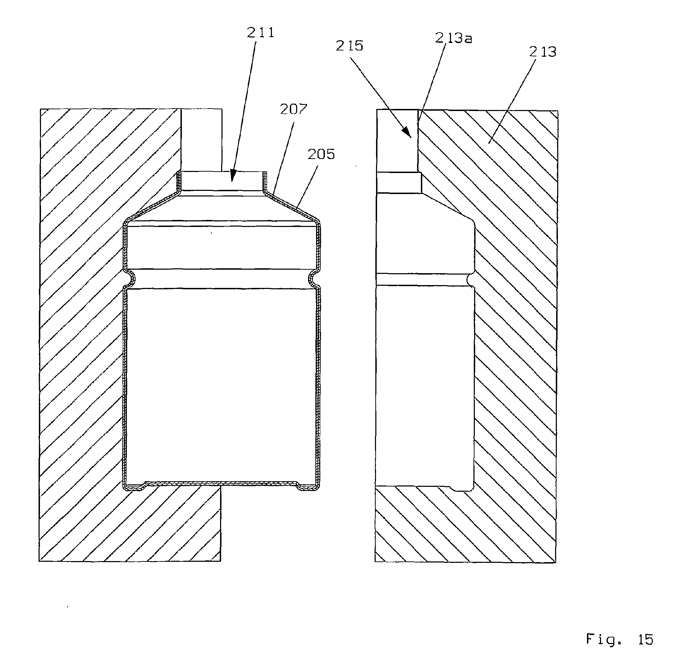

Lastly, once resin polymerisation has been obtained, the receptacle is extracted from the mould 213, as shown in detail in figure 15.

It is important to observe that, during the heating phase, the plastic material of which the body 210 is composed melts partially, amalgamating and combining with the fibres and the resin. This gives origin to a mixing and/or intermediate layer, which is situated between the plastic material and the composite material. This third layer is made of a mixture of the materials of the other two neighbouring layers and it represents the transition between these two different materials. Thanks to the partial melting of the plastic material the molecules of this layer can diffuse and penetrate into the composite layer giving origin to new chemical bonds with these polymers. The plastic material of the interior layer and the composite material of the external layer are kept together by the new chemical bonds formed inside the mixing and/or intermediate layer, thus forming a single body.

The internal pressure, which varies between 5 and 20 atm depending on the composite material used, and which in this specific case is about 6 atm, also contributes actively to this process.

The pressure inside the body 210 generates a force on the external surface of the body 210 which contributes to compact and amalgamate the plastic material and the resin, forming a mixing and/or intermediate layer where new chemical bonds between the molecules of the plastic layer and those of the composite material layer take place, making the two materials adhere definitively and generating a single body.

In another formulation of the invention, the compression of the resin and of the one or more fibrous elements against the walls 213a takes place by indirect action of the fluid F which, in that case, is blown into the inside of an expandable body located inside the cavity formed by the body 210.

It must also be observed that the increase in the temperature contributes to the expansion of the fluid F, composed in this specific case of air, inside the body 210, and also contributes to increase the internal pressure. This is obtained by checking the temperature of the fluid F and/or of the mould 213.

As regards the polymerisation temperature, it too ranges between 100 and 300°C according to the characteristics of the resin used. It must be observed that said temperature must be compatible with the softening temperature of the material of which the body 210 is made.

In fact a temperature much higher than the softening temperature of the material of which the body 210 is composed may cause the complete melting of the body 210 itself. Vice versa, too low a temperature would prevent the advantageous softening and the consequent "welding" or "interpenetration" of the body 210 with the composite material and the consequent formation of the mixing and/or intermediate layer.

Likewise the pressure may vary depending on the composite material.

It must also be observed that the high pressure also allows the optimum adhesion of the resin and the fibrous material to the surface of the mould, thus faithfully reproducing the shape of the desired receptacle or product.

According to a first variant, the pre-impregnated fabric 212 may be replaced by carbon or glass or Kevlar fibres, applied to the body 210 even individually, after application of the thermosetting resin.

As regards the hollow body 210, also called the pre-mould, in this specific case it is composed of a core which reproduces the final shape of the receptacle 202, and is made of plastic material. The pre-mould may be obtained for example by injection moulding or by blowing or with equivalent techniques.

According to a variant, the hollow body 210 does not present an opening 211 and the fluid F is blown in by making an opening on the body 210 with a tube which is inserted in the cavity that it identifies, perforating the body 210 itself.

Vice versa, should the body 210 present several openings, the pressurised fluid F may be blown into each opening or, alternatively, into one or more of those openings, in which case the others must be closed, even temporarily, to ensure the above-mentioned increase in pressure inside the body.

It is important to remember that, as already stated, the material used to make the hollow body 210 may be chosen among the materials suitable to be in contact with the product P to be contained.

This material is preferably of a synthetic type and such as to soften and/or melt partly when the temperature approaches the resin polymerisation temperature.

In particular, the body 210 may for example be made of plastic material, such as polyethylene, if the receptacle is to contain a liquid foodstuff or if it is to contain hydrocarbons.

The choice of material may advantageously give the receptacle 202 good heat-insulation characteristics.

The method described may be carried out also by an automatic or semiautomatic system comprising a unit for applying the pre-impregnated fabric or the resin and the fibrous substance, a moulding unit, a unit for blowing in a pressurised fluid and means for controlling the temperature of the body and of the resin.

The system may also comprise a unit for moulding the hollow body 210, located upstream from the above mentioned unit for applying the pre-impregnated fabric or the resin and the fibrous substance.

All the above clearly shows that the container element 202 and the method, as well as the system proposed, achieve the set aims.

In particular it is clear that advantageously the choice of the material that forms the internal surface allows containers or receptacles to be obtained that are suited to contain any substance or material.

The container element and the receptacle obtained are composed substantially of a compact material presenting a wall with the typical characteristics of the composite material and an internal surface that is such as not to interact with the product.

Even though the invention has been described making reference to the attached drawings, upon implementation changes can be made that shall all be considered protected by the present patent, provided that they are within the scope of the inventive concept expressed in the following claims.

## Claims

1. Method for making an element (1, 100, 101), comprising the following steps:
- applying at least one resin and one or more fibrous elements to at least one part of the external surface (2a) of a hollow body (2), **characterized in that** said hollow body (2) is made of a first material that softens at a temperature near the polymerisation temperature of said resin; and **in that** it further comprises;
- bringing said resin and said hollow body (2) at least to said polymerisation temperature to obtain at least the softening and/or the partial melting of the external surface (2a) of said hollow body (2) and to form a third mixing and/or intermediate layer made of said resin, said fibrous elements and said first material.

2. Method for making an element (1, 100, 101) as in claim 1, **characterized in that** said hollow body (2) is placed in a mould (4) before it is brought to said polymerization temperature.

3. Method as claimed in claim 2, **characterized in that** said mould (4) reproduces the external shape of said element (1, 100, 101).

4. Method as claimed in one of claims 2 and 3, **characterized in that** said resin and said one or more fibrous elements are compressed against the walls (6) of said mould (4) until reaching the polymerisation pressure of said resin.

5. Method as claimed in one of claims 1 to 4 , **characterized in that** the combination of said first material with said resin and said one or more fibrous elements is obtained.

6. Method according to one of claims 4 to 5, **characterised in that** said resin and said one or more fibrous elements are compressed against said walls by the direct and/or indirect action of a fluid (F) under pressure.

7. Method according to claim 6, **characterised in that** said fluid (F) is blown into said hollow body (2) through at least one opening (5) present in said hollow body (2).

8. Method according to claim 6, **characterised in that** said fluid (F) is blown into said hollow body through at least one opening made in said hollow body (2).

9. Method according to claim 6, **characterised in that** said fluid (F) is blown into an expandable body located inside said hollow body (2).

10. Method according to one of claims 6 to 9, **characterised in that** said fluid (F) is blown in at a pressure ranging between 5 and 20 atm.

11. Method according to one of claims 6 to 10, **characterised in that** said resin and said hollow body (10) are brought to said temperature by controlling the temperature of said mould (13) and/or said fluid (F).

12. Method according to any of the previous claims **characterised in that** said temperature is included between 100 and 300[deg.] C.

13. Method according to any of the previous claims, **characterised in that** said first material comprises at least one plastic material and/or one polymer.

14. Method according to claim 13, **characterised in that** said at least one polymer comprises PVC and/or rubber and/or polycarbonate and/or polyamide and/or PET and/or PETG and/or polyethylene and/or polypropylene.

15. Method according to any of the previous claims, **characterised in that** said resin comprises a thermosetting resin.

16. Method according to any of the previous claims, **characterised in that** said resin and said one or more fibrous elements belong to a pre- impregnated fabric comprising a thermosetting resin.

17. Method according to claim 15) or 16), **characterised in that** said thermosetting resin comprises an epoxy resin.

18. Method according to any of the previous claims, **characterised in that** said fibrous elements comprises glass and/or carbon and/or Kevlar fibres.

19. Method according to any of the previous claims, **characterised in that** said external surface (2a) of said hollow body (2) is provided with one ore more seats suited to contain said resin and said one or more fibrous elements.

20. Method according to any of the previous claims, **characterised in that** said element is a container element.

21. Method according to claim 20, **characterised in that** said container element is suited to contain a product (P), advantageously but not necessarily a foodstuff.

22. Element (201) produced according to a method as claimed in one of claims 1 to 21 and comprising a receptacle (202) suited to contain a product (P), advantageously but not necessarily a foodstuff, wherein at least one part of at least one wall (204) of said receptacle (202) comprises at least a first layer (205) comprising at least one resin and one or more fibrous elements, wherein the internal surface (206) of the walls of said receptacle (202) presents at least a second layer (207) of a material suited not to interact with said product (P) and softening at a temperature near the polymerization of said resin, **characterized in that** a third mixing and/or intermediate layer is situated between said first and second layers, said third layer originating from at least softening and/or melting of said material at the polymerization temperature of said resin and being made of said resin, said fibrous elements and said material.

23. Element (201) according to claim 22, **characterised in that** said first layer (205) of composite material substantially involves all the walls of said receptacle (202).

24. Element (201) according to claim 22 or 23, **characterised in that** said composite material comprises a polymer matrix and a dispersed fibrous phase.

25. Element (201) according to claim 22 or 23, **characterised in that** said polymer matrix and said fibrous phase comprise a pre-impregnated fabric comprising a thermosetting resin and glass and/or carbon and/or Kevlar fibres.

26. Element (201) according to claim 24, **characterised in that** said polymer matrix comprises a thermosetting resin.

27. Element (201) according to claim 25 or 26, **characterised in that** said thermosetting resin comprises an epoxy resin.

28. Element (201) according to claim 24 or 26 or 27 **characterised in that** said fibrous phase comprises glass and/or carbon and/or Kevlar fibres.

29. Element (201) according to any of the claims from 22 to 28, **characterised in that in that** the material with which said at least one second layer is made comprises at least one plastic material and/or one polymer.

30. Element (201) according to claim 29, **characterised in that** said at least one polymer comprises PVC and/or rubber and/or polycarbonate and/or polyamide and/or PET and/or PETG and/or polyethylene and/or polypropylene.

31. Element according to any of the claims from 22 to 30, **characterised in that** said at least one first layer (205) identifies at least one part of the external surface (208) of said receptacle (202).

32. Element according to any of the claims from 22 to 31 **characterised in that** said element is a container element

## Patentansprüche

1. Verfahren zum Herstellen eines Elements (1, 100, 101), umfassend die folgenden Schritte:
- das Auftragen von zumindest einem Harz und einem oder mehreren fasrigen Elementen auf zumindest einen Abschnitt der Außenoberfläche (2a) eines Hohlkörpers (2), **dadurch gekennzeichnet, dass** der Hohlkörper (2) aus einem ersten Material hergestellt ist, das bei einer Temperatur nahe der Polymerisationstemperatur dieses Harzes erweicht; und dass es ferner
- das Bringen des Harzes und des Hohlkörpers (2) zumindest auf die Polymerisationstemperatur umfasst, um zumindest das Erweichen und/oder das teilweise Schmelzen der Außenoberfläche (2a) des Hohlkörpers (2) zu bewirken und eine dritte Misch- und/oder Zwischenschicht auszubilden, die aus dem Harz, den fasrigen Elementen und dem ersten Material gebildet ist.

2. Verfahren zum Herstellen eines Elements (1, 100, 101) nach Anspruch 1, **dadurch gekennzeichnet, dass** der Hohlkörper (2) in eine Form (4) eingebracht wird, bevor er auf die Polymerisationstemperatur gebracht wird.

3. Verfahren nach Anspruch 2, **dadurch gekennzeichnet, dass** die Form (4) die Außenform des Elements (1, 100, 101) reproduziert.

4. Verfahren nach einem der Ansprüche 2 oder 3, **dadurch gekennzeichnet, dass** das Harz und das eine oder die mehreren fasrigen Elemente an den Wänden (6) der Form (4) komprimiert werden, bis der Polymerisationsdruck des Harzes erreicht ist.

5. Verfahren nach einem der Ansprüche 1 bis 4, **dadurch gekennzeichnet, dass** die Kombination des ersten Materials mit dem Harz und dem einen oder den mehreren fasrigen Elementen erreicht wird.

6. Verfahren nach einem der Ansprüche 4 oder 5, **dadurch gekennzeichnet, dass** das Harz und das eine oder die mehreren fasrigen Elemente durch die direkte und/oder indirekte Wirkung eines Fluids (F) unter Druck an den Wänden komprimiert werden.

7. Verfahren nach Anspruch 6, **dadurch gekennzeichnet, dass** das Fluid (F) durch zumindest eine Öffnung (5), die im Hohlkörper (2) vorhanden ist, in den Hohlkörper (2) eingeblasen wird.

8. Verfahren nach Anspruch 6, **dadurch gekennzeichnet, dass** das Fluid (F) durch zumindest eine Öffnung, die im Hohlkörper (2) ausgebildet ist, in den Hohlkörper eingeblasen wird.

9. Verfahren nach Anspruch 6, **dadurch gekennzeichnet, dass** das Fluid (F) in einen im Hohlkörper (2) angeordneten aufblasbaren Körper eingeblasen wird.

10. Verfahren nach einem der Ansprüche 6 bis 9, **dadurch gekennzeichnet, dass** das Fluid (F) mit einem Druck im Bereich zwischen 5 und 20 atm eingeblasen wird.

11. Verfahren nach einem der Ansprüche 6 bis 10, **dadurch gekennzeichnet, dass** das Harz und der Hohlkörper (10) auf die Temperatur gebracht werden, indem die Temperatur der Form und/oder des Fluids (F) geregelt wird.

12. Verfahren nach einem der vorangegangenen Ansprüche, **dadurch gekennzeichnet, dass** die Temperatur zwischen 100 und 300 °C liegt.

13. Verfahren nach einem der vorangegangenen Ansprüche, **dadurch gekennzeichnet, dass** das erste Material zumindest ein Kunststoffmaterial und/oder ein Polymer umfasst.

14. Verfahren nach Anspruch 13, **dadurch gekennzeichnet, dass** das zumindest eine Polymer PVC und/oder Kautschuk und/oder Polycarbonat und/oder Polyamid und/oder PET und/oder PETG und/oder Polyethylen und/oder Polypropylen umfasst.

15. Verfahren nach einem der vorangegangenen Ansprüche, **dadurch gekennzeichnet, dass** das Harz ein wärmehärtendes Harz umfasst.

16. Verfahren nach einem der vorangegangenen Ansprüche, **dadurch gekennzeichnet, dass** das Harz und das eine oder die mehreren fasrigen Elemente zu einem vorimprägnierten Stoff gehören, der ein wärmehärtendes Harz umfasst.

17. Verfahren nach Anspruch 15 oder 16, **dadurch gekennzeichnet, dass** das wärmehärtende Harz ein Epoxidharz umfasst.

18. Verfahren nach einem der vorangegangenen Ansprüche, **dadurch gekennzeichnet, dass** die fasrigen Elemente Glas- und/oder Kohlenstoff- und/oder Kevlarfasern umfassen.

19. Verfahren nach einem der vorangegangenen Ansprüche, **dadurch gekennzeichnet, dass** die Außenoberfläche (2a) des Hohlkörpers (2) mit einem oder mehreren Sitzen ausgestattet ist, die dazu geeignet sind, das Harz und das eine oder die mehreren fasrigen Elemente zu enthalten.

20. Verfahren nach einem der vorangegangenen Ansprüche, **dadurch gekennzeichnet, dass** das Element ein Behälterelement ist.

21. Verfahren nach Anspruch 20, **dadurch gekennzeichnet, dass** das Behälterelement dazu geeignet ist, ein Produkt (P) zu enthalten, bei dem es sich vorteilhafterweise, jedoch nicht notwendigerweise, um ein Lebensmittel handelt.

22. Element (201), das gemäß einem Verfahren nach einem der Ansprüche 1 bis 21 hergestellt wurde und ein Behältnis (202) umfasst, das dazu geeignet ist, ein Produkt (P), bei dem es sich vorteilhafterweise, jedoch nicht notwendigerweise, um ein Lebensmittel handelt, zu enthalten, wobei zumindest ein Abschnitt von zumindest einer Wand (204) des Behältnisses (202) zumindest eine erste Schicht (205) umfasst, die zumindest ein Harz und ein oder mehrere fasrige Elemente umfasst, wobei die Innenoberfläche (206) der Wände des Behältnisses (202) zumindest eine zweite Schicht (207) aus einem Material aufweist, das dazu geeignet ist, nicht mit dem Produkt (P) zu wechselwirken, und das bei einer Temperatur nahe der Polymerisation des Harzes erweicht, **dadurch gekennzeichnet, dass** eine dritte Misch- und/oder Zwischenschicht zwischen der ersten und der zweiten Schicht angeordnet ist, wobei die dritte Schicht sich aus zumindest dem Erweichen und/oder dem Schmelzen des Materials bei der Polymerisationstemperatur des Harzes ergibt und aus dem Harz, den fasrigen Elementen und dem Material gebildet ist.

23. Element (201) nach Anspruch 22, **dadurch gekennzeichnet, dass** die erste Schicht (205) aus Verbundmaterial im Wesentlichen alle Wände des Behältnisses (202) betrifft.

24. Element (201) nach Anspruch 22 oder 23, **dadurch gekennzeichnet, dass** das Verbundmaterial eine Polymermatrix und eine dispergierte, fasrige Phase umfasst.

25. Element (201) nach Anspruch 22 oder 23, **dadurch gekennzeichnet, dass** die Polymermatrix und die fasrige Phase einen vorimprägnierten Stoff umfassen, der ein wärmehärtendes Harz und Glas- und/oder Kohlenstoff- und/oder Kevlarfasern umfasst.

26. Element (201) nach Anspruch 24, **dadurch gekennzeichnet, dass** die Polymermatrix ein wärmehärtendes Harz umfasst.

27. Element (201) nach Anspruch 25 oder 26, **dadurch gekennzeichnet, dass** das wärmehärtende Harz ein Epoxidharz umfasst.

28. Element (201) nach Anspruch 24 oder 26 oder 27, **dadurch gekennzeichnet, dass** die fasrige Phase Glas- und/oder Kohlenstoff- und/oder Kevlarfasern umfasst.

29. Element (201) nach einem der Ansprüche 22 bis 28, **dadurch gekennzeichnet, dass** das Material, mit dem die zumindest eine zweite Schicht hergestellt ist, zumindest ein Kunststoffmaterial und/oder ein Polymer umfasst.

30. Element (201) nach Anspruch 29, **dadurch gekennzeichnet, dass** das zumindest eine Polymer PVC und/oder Kautschuk und/oder Polycarbonat und/oder Polyamid und/oder PET und/oder PETG und/oder Polyethylen und/oder Polypropylen umfasst.

31. Element (201) nach einem der Ansprüche 22 bis 30, **dadurch gekennzeichnet, dass** die zumindest eine erste Schicht (205) zumindest einen Abschnitt der Außenoberfläche (208) des Behältnisses (202) identifiziert.

32. Element nach einem der Ansprüche 22 bis 31, **dadurch gekennzeichnet, dass** das Element ein Behälterelement ist.

## Revendications

1. Méthode pour la réalisation d'un élément (1, 100, 101), comprenant les phases suivantes :
- l'application d'au moins une résine et un ou plusieurs éléments fibreux sur au moins une partie de la surface extérieure (2a) d'un corps creux (2), **caractérisée en ce que** ledit corps creux (2) est constitué d'un premier matériel qui devient souple à une température près de la température de polymérisation de ladite résine ; et **en ce qu'**elle comprend également :
- l'apport de ladite résine et dudit corps creux (2) à au moins ladite température de polymérisation afin d'obtenir au moins l'assouplissement et/ou la fusion partielle de la surface extérieure (2a) dudit corps creux (2) et de réaliser une troisième couche intermédiaire et/ou de mélange constituée de ladite résine, desdits éléments fibreux et dudit premier matériel.

2. Méthode pour la réalisation d'un élément (1, 100, 101) selon la revendication 1, **caractérisée en ce que** ledit corps creux (2) est situé dans un moule (4) avant d'être porté à ladite température de polymérisation.

3. Méthode selon la revendication 2, **caractérisée en ce que** ledit moule (4) reproduit la forme extérieure dudit élément (1, 100, 101).

4. Méthode selon l'une des revendications 2 et 3, **caractérisée en ce que** ladite résine et ledit un ou plusieurs éléments fibreux sont comprimés contre les parois (6) dudit moule (4) jusqu'à atteindre la pression de polymérisation de ladite résine.

5. Méthode selon l'une des revendications de 1 à 4, **caractérisée en ce que** la combinaison dudit premier matériel avec ladite résine et ledit un ou plusieurs éléments fibreux est obtenue.

6. Méthode selon l'une des revendications de 4 à 5, **caractérisée en ce que** ladite résine et ledit un ou plusieurs éléments fibreux sont comprimés contre lesdites parois par l'action directe et/ou indirecte d'un fluide (F) sous pression.

7. Méthode selon la revendication 6, **caractérisée en ce que** ledit fluide (F) est soufflé dans ledit corps creux (2) au moyen d'au moins une ouverture (5) présente sur ledit corps creux (2).

8. Méthode selon la revendication 6, **caractérisée en ce que** ledit fluide (F) est soufflé dans ledit corps creux au moyen d'au moins une ouverture réalisée sur ledit corps creux (2).

9. Méthode selon la revendication 6, **caractérisée en ce que** ledit fluide (F) est soufflé dans un corps expansible situé à l'intérieur dudit corps creux (2).

10. Méthode selon l'une des revendications de 6 à 9, **caractérisée en ce que** ledit fluide (F) est soufflé à une température comprise entre 5 et 20 atm.

11. Méthode selon l'une des revendications de 6 à 10, **caractérisée en ce que** ladite résine et ledit corps creux (10) sont portés à ladite température en réglant la température dudit moule (13) et/ou dudit fluide (F).

12. Méthode selon l'une quelconque des revendications précédentes, **caractérisée en ce que** ladite température est comprise entre 100 et 300 degrés C.

13. Méthode selon l'une quelconque des revendications précédentes, **caractérisée en ce que** ledit premier matériel comprend au moins un matériel plastique et/ou un polymère.

14. Méthode selon la revendication 13, **caractérisée en ce que** ledit au moins un polymère comprend PVC et/ou caoutchouc et/ou polycarbonate et/ou polyamide et/ou PET et/ou PETG et/ou polyéthylène et/ou polypropylène.

15. Méthode selon l'une quelconque des revendications précédentes, **caractérisée en ce que** ladite résine comprend une résine thermodurcissable.

16. Méthode selon l'une quelconque des revendications précédentes, **caractérisée en ce que** ladite résine et ledit un ou plusieurs éléments fibreux appartiennent à un tissu pré-imprégné comprenant une résine thermodurcissable.

17. Méthode selon la revendication 15 ou 16, **caractérisée en ce que** ladite résine thermodurcissable comprend une résine époxyde.

18. Méthode selon l'une quelconque des revendications précédentes, **caractérisée en ce que** lesdits éléments fibreux comprennent verre et/ou carbon et/ou fibres Kevlar.

19. Méthode selon l'une quelconque des revendications précédentes, **caractérisée en ce que** la surface extérieure (2a) dudit corps creux (2) est dotée d'un ou plusieurs sièges indiqués pour contenir ladite résine et ledit un ou plusieurs éléments fibreux.

20. Méthode selon l'une quelconque des revendications précédentes, **caractérisée en ce que** ledit élément est un élément conteneur.

21. Méthode selon la revendication 20, **caractérisée en ce que** ledit élément conteneur est apte à contenir un produit (P), avantageusement mais pas nécessairement un aliment.

22. Élément (201) produit selon une méthode réalisée en conformité avec l'une quelconque des revendications de 1 à 21 et comprenant un récipient (202) apte à contenir un produit (P), avantageusement mais pas nécessairement un aliment, où au moins une partie d'au moins une paroi (204) dudit récipient (202) comprend au moins une première couche (205) comprenant au moins une résine et un ou plusieurs éléments fibreux, où la surface intérieure (206) des parois dudit récipient (202) présente au moins une deuxième couche (207) d'un matériel apte à ne pas interagir avec ledit produit (P) et qui s'assouplit à une température près de la température de polymérisation de ladite résine, **caractérisé en ce qu'**une troisième couche intermédiaire et/ou de mélange est située entre lesdites première et deuxième couches, ladite troisième couche résultant d'au moins l'assouplissement et/ou la fusion dudit matériel à la température de polymérisation de ladite résine et étant constituée de ladite résine, desdits éléments fibreux et dudit matériel.

23. Élément (201) selon la revendication 22, **caractérisé en ce que** ladite première couche (205) de matériel composite touche essentiellement toutes les parois dudit récipient (202).

24. Élément (201) selon la revendication 22 ou 23, **caractérisé en ce que** ledit matériel composite comprend une matrice polymère et une phase fibreuse dispersée.

25. Élément (201) selon la revendication 22 ou 23, **caractérisé en ce que** ladite matrice polymère et ladite phase fibreuse comprennent un tissu pré-imprégné comprenant une résine thermodurcissable et verre et/ou carbon et/ou fibres Kevlar.

26. Élément (201) selon la revendication 24, **caractérisé en ce que** ladite matrice polymère comprend une résine thermodurcissable.

27. Élément (201) selon la revendication 25 ou 26, **caractérisé en ce que** ladite résine thermodurcissable comprend une résine époxyde.

28. Élément (201) selon la revendication 24, 26 ou 27, **caractérisé en ce que** ladite phase fibreuse comprend verre et/ou carbon et/ou fibres Kevlar.

29. Élément (201) selon l'une quelconque des revendications de 22 à 28, **caractérisé en ce que** le matériel avec lequel ladite au moins une deuxième couche est réalisée comprend au moins un matériel plastique et/ou un polymère.

30. Élément (201) selon la revendication 29, **caractérisé en ce que** ledit au moins un polymère comprend PVC et/ou caoutchouc et/ou polycarbonate et/ou polyamide et/ou PET et/ou PETG et/ou polyéthylène et/ou polypropylène.

31. Élément selon l'une quelconque des revendications de 22 à 30, **caractérisé en ce que** ladite au moins une première couche (205) identifie au moins une partie de la surface extérieure (208) dudit récipient (202).

32. Élément selon l'une quelconque des revendications de 22 à 31, **caractérisé en ce que** ledit élément est un élément conteneur.
